# EUROPÄISCHE PATENTSCHRIFT

(11) **EP 1 076 781 B1**
(45) Veröffentlichungstag und Bekanntmachung des Hinweises auf die Patenterteilung: **18.12.2002**
(21) Anmeldenummer: 99922147.6
(22) Anmeldetag: 30.04.1999
(51) Int. Cl.: F16F 7/12

(54) **TRAGSTRUKTUR MIT EINEM DEFORMATIONSELEMENT MIT RADIALVERFORMUNGSBEGRENZERN**
SUPPORT ELEMENT COMPRISING A DEFORMATION ELEMENT WITH RADIAL DEFORMATION LIMITERS
STRUCTURE PORTEUSE PRESENTANT UN ELEMENT DE DEFORMATION AVEC DES LIMITEURS DE DEFORMATION RADIALE

(30) Priorität: 07.05.1998 DE 19820463
(43) Veröffentlichungstag der Anmeldung: 21.02.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); KRUSE, Carsten, D-53797 Lohmar (DE); STRIGL, Raimund, D-85084 Reichertshofen (DE)
(74) Vertreter: Kahlhöfer, Hermann, Dipl.-Phys.
(86) Internationale Anmeldenummer: EP9902946
(87) Internationale Veröffentlichungsnummer: WO99057453

(56) Entgegenhaltungen:
- WO-A-98/06553
- DE-A- 4 445 557
- DE-A- 19 650 647
- FR-A- 2 211 901
- FR-A- 2 761 434
- GB-A- 1 489 065
- GB-A- 2 305 487
- US-A- 3 130 819
- US-A- 4 829 979
- PATENT ABSTRACTS OF JAPAN vol. 003, no. 029 (M-051), 10. März 1979 (1979-03-10) & JP 54 003667 A (MITSUBISHI MOTORS CORP), 11. Januar 1979 (1979-01-11)
- PATENT ABSTRACTS OF JAPAN vol. 095, no. 009, 31. Oktober 1995 (1995-10-31) & JP 07 145842 A (SUMITOMO LIGHT METAL IND LTD), 6. Juni 1995 (1995-06-06)

## Beschreibung

Die Erfindung betrifft eine Tragstruktur mit einem Deformationselement, insbesondere für ein Kraftfahrzeug, zur Absorption von Bewegungsenergie bei einem Aufprall gemäß Oberbegriff von Anspruch 1 und die Verwendung einer Tragstruktur gemäß Anspruch 31.

Deformationselemente zur Absorption von Bewegungsenergie werden in unterschiedlichsten Bereichen der Technik eingesetzt. Ein besonderes Anwendungsgebiet für derartige Elemente sind Kraftfahrzeuge, deren technische und Sicherheitsstandards es erfordern, daß im Fall von geringen Stößen die Stoßenergie durch entsprechende Elemente im wesentlichen elastisch und im Fall von stärkeren Stößen beispielsweise bei Unfällen die Bewegungsenergie durch derartige Elemente aufgenommen und in Verformung derselben umbesetzt wird. So sind beispielsweise Deformationselemente bekannt, welche für Längsträger eines Fahrzeuges eingesetzt werden und welche bei einem Aufprall bis zu 4 km/h schadensfrei bleiben und bei einem Aufprall bis zu 15 km/h die gesamte Bewegungsenergie aufnehmen und in Verformung umsetzen. Solche Deformationselemente sind in der Regel in die Längsträger zu einer einheitlichen Tragstruktur integriert, so daß bei deren Beschädigung die gesamten Längsträger ausgetauscht werden müssen. Die Aufnahme von im wesentlichen der gesamten Bewegungsenergie durch die Deformationselemente, ohne daß wesentliche Teile dieser Deformationsenergie auf die restlichen Strukturen eines Kraftfahrzeuges übertragen werden, ist eine Forderung, welche auch im Hinblick auf die Erhöhung der Überlebenschancen von Personen bei verunglückten Fahrzeugen erfüllt werden muß.

In der Technik sind zahlreiche Anwendungen von Wabenstrukturen für unterschiedliche Anwendungsfälle bekannt. So werden Wabenstrukturen beispielsweise im Flugzeugbau eingesetzt, wo insbesondere Forderungen nach Leichtbauweise und hoher Festigkeit von Bedeutung sind. Des weiteren sind Wabenstrukturen aus Bereichen bekannt, wo weniger die Festigkeit einer solchen Wabenstruktur als vielmehr die Erhöhung der Oberfläche eine Rolle spielt, wie z.B. bei Katalysator-Trägerkörpern im Abgassystem eines Kraftfahrzeuges zur Abreinigung von im Abgas nach der Verbrennung im Motor noch verbliebenen schädlichen Abgasbestandteilen.

Aus DE-U-89 00 467, EP 0 389 751 A1, GB-2 029 720 A, DE 40 24 942 A1, DE 38 09 490 C1, DE 44 45 557 A1 sind unterschiedliche Konfigurationen und Strukturen der Wabenkörper bekannt. Diese beschriebenen Wabenkörper dienen in der Regel dem Zweck, die Strömungseigenschaften im Inneren der als Strömungskanäle ausgebildeten Kanäle des Matrixkörpers zu Erzielung von verbesserten chemischen Reaktionen zu verbessern. Die den eigentlichen Matrixkörper umgebenden Ummantelungen dienen der Aufnahme der hohen thermischen Belastungen, welchen ein derartiger Katalysator-Trägerkörper im Abgassystem eines Kraftfahrzeuges ausgesetzt ist.

Aus der DE 196 50 647 A1 ist ein Deformationselement für ein Kraftfahrzeug bekannt, bei welchem ein an sich bekannter Wabenkörper, welcher in einem Mantelrohr angeordnet ist, als Deformationselement eingesetzt ist.

Ein weiteres Deformationselement geht aus der Patentschrift US 3,130,819 hervor. Das dort beschriebene Deformationselement umfasst eine Wabenstruktur, die von einem flexiblen Band umwickelt ist. Dieses flexible Band hat eine hohe Zugfestigkeit, wobei einerseits eine gute Deformierbarkeit in axialer Richtung gewährleistet und andererseits ein Heraussplittern von Teilen des Wabenkörpers vermieden wird. Demzufolge wird die Oberfläche der Wabenstruktur vollständig mit einem spiralig gebundenen, flexiblen Band bedeckt.

Nachteilig bei den bekannten Deformationselementen ist, daß sie entweder vollständig in die Tragstrukturen integriert sind, weshalb im Schadensfall die gesamte Tragstruktur ausgewechselt werden muß, oder daß beim Einsatz von Deformationselementen mit Wabenstruktur im Falle von eingeleiteter hoher Bewegungsenergie relativ rasch ein steiler Anstieg der Kurve im Deformationskraft-Deformationsweg-Profil (F,s-Profil) auftritt, welcher bedeutet, daß die auftretenden hohen Deformationskräfte direkt in die Tragstruktur weitergeleitet werden. Nachteilig ist des weiteren, daß die bekannten Deformationselemente mit einer Wabenstruktur eine Ummantelung aufweisen, welche das Deformationsverhalten nicht unerheblich gegebenenfalls auch nachteilig beeinflußt.

Es ist daher die Aufgabe der vorliegenden Erfindung, eine Tragstruktur mit einem Deformationselement zur Absorption von Bewegungsenergie zu schaffen, welches gegenüber herkömmlichen Deformationselementen insbesondere entsprechend der jeweiligen anwendungsspezifischen Auslegung ein gewünschtes F,s-Profil gewährleistet, welches den Einfluß einer Ummantelung auf das Deformationsverhalten minimiert und welches insbesondere für Stoßfängersysteme von Fahrzeugen einsetzbar ist.

Diese Aufgabe wird durch eine Tragstruktur mit einem Deformationselement zur Absorption von Bewegungsenergie mit den Merkmalen gemäß Anspruch 1 gelöst.

Zweckmäßige Weiterbildungen sind in den abhängigen Ansprüchen definiert.

Gemäß der Erfindung weist die Tragstruktur ein Deformationsetemeat, insbesondere für Kraftfahrzeuge, zur Absorption von Bewegungsenergie bei einem Aufprall auf. Das Deformationselement ist nach Einleitung der Bewegungsenergie bis zu einer Restblocklänge deformierbar und ist mit der Tragstruktur verbunden, wobei das Deformationselement einen wabenförmigen Matrixkörper aufweist. Erfindungsgemäß ist das Deformationselement selbsttragend ausgebildet, d.h. der Matrixkörper weist eine ausreichende Steifigkeit auf. Darüber hinaus ist der Matrixkörper des Deformationselementes von zumindest einem Radialverformungsbegrenzer mit geringer Axialsteifigkeit umgeben.

Der Radialverformungsbegrenzer ist als eine Ummantelung mit geringer Axialsteifigkeit ausgebildet, welche den Matrixkörper umgibt und welche vorzugsweise in Form von beabstandeten Mantelringen ausgebildet ist. Die Mantelringe haben dabei die Aufgabe, als Radialverformungsbegrenzer zu wirken und dennoch beim Komprimieren des Matrixkörpers des Deformationselementes keine Störgröße für das Deformationsverhalten darzustellen.

Die Aufgabe eines derartigen Radialverformungsbegrenzers besteht darin, beim Einleiten von Bewegungsenergie in das Deformationselement zu verhindern, daß bei der Deformation des Deformationselementes dessen Matrixkörper sich stark in radialer Richtung bzw. in einer Richtung verschieden von der Längsachse des Matrixkörpers des Deformationselementes verformt. Ein Verlagern von Teilen des Matrixkörpers während dessen Längsdeformation seitlich weg von der Längsachse des Deformationselementes führt nämlich dazu, daß die gewünschten Deformationseigenschaften, entsprechend welcher das Deformationselement ausgelegt wurde, nicht eingehalten werden. Denn in einem solchen Fall kann die Bewegungsenergie nur bedingt durch das Deformationselement aufgenommen werden. Daher sind um das Äußere des Matrixkörpers Radialverformungsbegrenzer angeordnet, welche gewährleisten, daß der Matrixkörper im wesentlichen nur innerhalb seines ursprünglichen Volumenbereiches verformt und zusammengequetscht wird, wenn Kräfte in axialer oder auch etwas seitlicher Richtung auf ihn einwirken. Die Radialverformungsbegrenzer sind aber so dimensioniert, daß sie im übrigen einen möglichst geringen Einfluß auf das Deformationsverhalten des Deformationselementes und damit sein F,s-Profil haben.

Das Deformationsverhalten des Deformationselementes soll im wesentlichen durch den Matrixkörper allein bestimmt werden. Eine mit einem relativ starken Material ausgebildete Ummantelung, welche die gesamte Außenseite des Matrixkörpers in Form einer Hülle bzw. eines Mantels umgibt, übt einen relativ großen Einfluß auf das Deformationsverhalten aus. Je weniger Einfluß die radialen Verformungsbegrenzer auf das Deformationsverhalten des Deformationslementes ausüben, um so besser kann die spezielle Ausbildung des Matrixkörpers einschließlich dessen Dimensionierung dafür genutzt werden, ein anwendungsspezifisches F,s-Profil zu gewährleisten.

Gemäß einem weiteren Ausführungsbeispiel ist der Radialverformungsbegrenzer als faltenbalgartiger Wellschlauch mit Sollknickstellen ausgebildet Der Innendurchmesser des Wellschlauches ist dabei so dimensioniert, daß dessen Wellentäler die Umfangsoberfläche des Matrixkörpers im wesentlichen berühren. Ein derartiger faltenbalgartiger Wellschlauch ist insbesondere in axialer Richtung leicht deformierbar, so daß bei einer Deformation des Matrixkörpers im wesentlichen in dessen Längsrichtung zur Aufnahme von Bewegungsenergie der Wellschlauch keinen wesentlichen Beitrag zur Aufnahme der Bewegungsenergie leistet. Durch das Vorhandensein von Sollknickstellen im faltenbalgartigen Wellschlauch wird beim Komprimieren des Matrixkörpers längs seiner Längsrichtung gewährleistet, daß die einzelnen Wellen des Wellschlauches sozusagen aufeinandergefaltet werden.

Vorzugsweise ist die beim vollständigen Deformieren des Deformationselementes theoretisch sich ergebende Restblocklänge der Ummantelung kleiner oder allenfalls gleich der Restblocklänge des Matrixkörpers. Dadurch ist gewährleistet, daß beim vollständigen Deformieren die Radialverformungsbegrenzer keinen nennenswerten Einfluß auf das Deformationsverhalten und damit das F,s-Profil ausüben.

Gemäß einem weiteren Ausführungsbeispiel sind die Wellungen des Wellschlauches der Ummantelung so ausgebildet, daß sie zu Beginn des Deformationsvorganges als Initialkeime fiir Knickstellen und/oder Faltstellen des Radialverformungsbegrenzers wirken. Durch diese Initialkeime wird gewährleistet, daß insbesondere zu Beginn des Deformationsvorganges der vorhandene Anfangspeak im F,s-Profil nicht noch durch die Radialverformungsbegrenzer erhöht wird. Vielmehr ist der Matrixkörper so ausgebildet, daß gerade der Anfangspeak im F,s-Profil zumindest moderat ausfällt bzw. vorzugsweise vollständig eliminiert ist.

Gemäß einem weiteren Ausführungsbeispiel der Erfindung ist das Deformationselement zumindest an einer Stirnseite, an welcher sich eine Abstützung an der Tragstruktur befindet, mit einer Lochplatte mit zumindest einem Loch versehen. Das zumindest eine Loch der Lochplatte ist so dimensioniert, daß im Bereich des Loches befindliche Teile des Matrixkörpers bei eingeleiteter hoher Bewegungsenergie in Richtung des Deformationsweges in das Loch bzw. durch das Loch versetzbar sind. Das Versetzen von im Bereich des Loches befindlichen Teilen des Matrixkörpers durch das Loch bzw. in das Loch hinein in Richtung des Hauptdeformationsweges tritt vor Erreichen der Restblocklänge auf, wobei das Abscheren von einzelnen Blechlagen im Bereich des Randes der Löcher und das Stauchen der Blechlagen im wesentlichen gleichzeitig auftreten, so daß Teile des Matrixkörpers in das Loch ein- bzw. durch dieses hindurchtreten. Das Erreichen der Restblocklänge weist das Deformationselement noch eine gewisse Restporosität auf. Die Radialverformungsbegrenzer um den Matrixkörper sind so ausgebildet, daß sie das F,s-Profil allenfalls unbedeutend beeinflussen.

Der wesentliche Vorteil dieser erfindungsgemäßen Ausbildung besteht unter anderem darin, daß verglichen mit dem maximalen Deformationsweges bei Vorhandensein einer Abschlußplatte ohne Loch, d.h. keiner Lochplatte, die sich ergebende Restblocklänge mit Lochplatte verringert ist und sich dadurch der maximale Deformationsweg erhöht, da das zumindest eine Loch in der Lochplatte so bemessen ist, daß unter der Wirkung von Stauch- und Scherkräften Teile des Matrixkörpers, welche im Bereich des Loches angeordnet sind, beim Einleiten von Bewegungsenergie in das Deformationselement diese Teile des Matrixkörpers sich auch in das Loch hineinschieben bzw. auch aus dem Loch herausschieben. Dadurch wird der steile Kraftanstieg bei Erreichen der Restblocklänge gegenüber einem Deformationselement mit geschlossener, an dessen Stirnseite angeordneter Abdeckplatte bzw. bei dessen kompletter stirnseitiger Anlage an der Abstützung der Tragstruktur verzögert, d. h. im F,s-Profil weiter nach rechts verschoben.

Vorzugsweise weist die Lochplatte mehrere Löcher auf, welche in der Fläche der Lochplatte gleichmäßig oder ungleichmäßig verteilt sein können. Die Größe der Löcher ist dabei vorzugsweise so bemessen, daß unter der Wirkung der Stauch- und Scherkräfte beim Einleiten von Bewegungsenergie die im Bereich der Löcher angeordneten Teile des Matrixkörpers im wesentlichen in alle Löcher hinein bzw. durch diese hindurchschieben können.

Vorzugsweise ist der Rand des jeweiligen Loches so ausgebildet, daß er über möglichst viele Blechlagen verläuft. Dies ist erforderlich, damit die im Bereich des Lochrandes befindlichen Blechlagen des Matrixkörpers infolge von Scherkräften abgeschert werden und nicht einzelne Teile des Matrixkörpers ohne Abscheren durch das Loch hindurch versetzt werden. Vorzugsweise sind die Löcher im Außenbereich der Lochplatte angeordnet. Dies trägt ebenfalls dazu bei, daß ein Einfluß der Radialverformungsbegrenzer auf das F,s-Profil des Matrixkörpers beim Deformieren verhindert bzw. minimiert wird. Indem insbesondere im Außenbereich Teile des Matrixkörpers durch die Löcher der Lochplatte in Richtung des Deformationsweges versetzbar sind, ist es möglich, daß der dadurch geschaffene Hohlraum durch die durch die Verformungsbegrenzer bei deren Deformation gegebenenfalls aufgebrachte Seitenkraft zusammengedrückt wird. Dies trägt auch zu einer Verkürzung der Restblocklänge bei.

Gemäß einem weiteren bevorzugten Ausführungsbeispiel sind ca. 20 bis 80%, vorzugsweise 40 bis 60 %, der Gesamtfläche der Lochplatte als Löcher ausgebildet. Dadurch ist genügend Freiraum gegeben, durch welchen bzw. in welchen abgescherte Teile des Matrixkörpers beim Einleiten von hoher Bewegungsenergie durch die Lochplatte hindurchtreten können. Vorzugsweise sind die Ränder der Löcher so ausgebildet, daß sie über mindestens zehn Blechlagen verlaufen. Beispielsweise kann bei Vorsehen eines einzigen Loches bei einem Durchmesser des Matrixkörpers von 90 mm der Lochdurchmesser ca. 55 mm betragen. Je nach Einsatzzweck und gewünschtem F,s-Profil können die entsprechenden Löcher in der Lochplatte bezüglich ihrer Anordnung und bezüglich ihrer Größe jedoch davon abweichen.

Gemäß einer weiteren Ausbildung ist die Lochplatte vorzugsweise mit ihrem Rand in die Abstützung der Tragstruktur integriert, so daß ausreichende Stützkräfte vorhanden sind und andererseits eine hohe Deformationsenergie eingeleitet werden kann.

Das Deformationselement ist in der Tragstruktur einseitig oder beidseitig vorzugsweise so abgestützt bzw. gehalten, daß die zu absorbierende Bewegungsenergie im wesentlichen in Längsrichtung des Deformationselementes einleitbar ist. Durch die Ausbildung des wabenförmigen Matrixkörpers mit einer Vielzahl von Kanälen, durch die Ausbildung einer Lochplatte mit definiert dimensionierten Löchern, durch die Materialstärken und Materialarten usw. besteht eine hohe Entwurfsflexibilität im Hinblick auf die Erzielung spezieller, auf jeweilige Anwendungsfälle ausgerichtete Dimensionierungen des erfindungsgemäßen Deformationselementes. Es ist somit möglich, ein gewünschtes F,s-Profil zu realisieren.

Wenn das Deformationselement rohrförmig ausgebildet ist, so wird dies auch als Deformationsrohr (DEFO-Rohr) bezeichnet. Prinzipiell wird das Deformationselement mittels einer entsprechenden Formgebung und Wahl der oben genannten Parameter so ausgebildet, daß ein möglichst langer Verformungsweg bei gegebenen Bauteilabmessungen erzielt wird.

Ein weiterer Vorteil eines derartigen erfindungsgemäßen Deformationselementes besteht darin, daß über ein spezielles Design des Deformationselementes einschließlich seiner Radialverformungsbegrenzer eine leichte Montage bzw. Demontage erzielt werden kann. Des weiteren dient das Design der jeweiligen Wabenstruktur des Matrixkörpers der Erzielung von Tragfähigkeitseigenschaften, welche gewährleistet werden müssen, wenn das erfindungsgemäße Deformationselement in Rahmen- bzw. Tragstrukturen integriert bzw. eingebettet ist, so daß Belastungen übertragbar sind, bei denen das Deformationselement auch die bei Stoßbelastung auftretende Bewegungsenergie aufzunehmen in der Lage ist. Des weiteren kann über eine geeignete Materialauswahl, falls der jeweilige Einsatzzweck dies erfordert, korrosionsfestes Material für das erfindungsgemäße Deformationselement verwendet werden. Es ist jedoch auch möglich, aus Kostengründen auf korrosionsfeste Materialien zu verzichten und die fiir das erfindungsgemäße Element verwendeten Materialien mit an sich bekannten Korrosionsschutzüberzügen zu versehen. Die Festigkeit kann des weiteren über die jeweilige Dicke der Radialverformungsbegrenzer bzw. über den dafür ausgewählten Werkstoff beeinflußt werden.

Über die Auslegung des Matrixkörpers kann das Deformationsverhalten auch dadurch zielgerichtet beeinflußt werden, daß beispielsweise Blechlagen mit transversalen Strukturen eingesetzt werden. Ein maximaler Verformungsweg läßt sich erreichen, indem die einzelnen Blechlagen Lochungen, Schlitze oder Longitudinalstrukturen aufweisen. Die Festigkeit bzw. das Gewicht des erfindungsgemäßen Deformationselementes kann des weiteren über dessen Zelldichte, die Foliendicke, den Wickeltyp des Matrixkörpers zielgerichtet beeinflußt werden. Auch ist dies beispielsweise über Schrägwellungen über die Anordnung in Form eines Kreuzwickels möglich. Es ist des weiteren auch möglich, den Matrixkörper so auszubilden, daß die radiale Steifigkeit am Rand herabgesetzt wird.

Gemäß einem weiteren Ausführungsbeispiel weist die Ummantelung eine Sicke oder mehrere im wesentlichen quer zu den Kanälen der Matrix angeordnete Sicken auf. Diese Sicken haben den Vorteil, daß bei im wesentlichen in Längsrichtung des Deformationselementes eingeleiteter Bewegungsenergie die Sicken zum einen eine gewisse Anfangselastizität aufweisen und zum anderen Stellen darstellen, an welchen der Mantel zuerst Bewegungsenergie aufnimmt, indem bei entsprechend vorhandenen Deformationskräften die Schenkel einer jeweiligen Sicke aufeinandergefaltet werden, bevor die zwischen den Sicken im wesentlichen glatten Bereiche des Mantels einer direkten weiteren Verformung ausgesetzt sind. Diese Sicken stellen somit Solldeformationsstellen dar, wobei die Radialverformungsbegrenzer eine Deformation im wesentlichen nur in Richtung der Längsachse des Deformationselementes zulassen.

Die Radialverformungsbegrenzer weisen je nach Anwendung und je nach aufzunehmender Höhe der Bewegungsenergie eine Wanddicke von 0,3 mm bis 2,0 mm auf, bevorzugt bei Verwendung von Aluminium 0,5 bis 2,0 mm, bei Stahl, insbesondere Tiefziehstahl 0,3 bis 1,5 mm. Eine geringere Dicke ist jedoch bevorzugt. Vorzugsweise weisen die gewellten Blechlagen des Matrixkörpers eine Dicke von etwa 0,02 mm bis 0,2 mm auf, bevorzugt bei Blechlagen aus Aluminium 0,05 bis 0,2 mm, bei Stahlblechen, insbesondere aus Tiefziehstahl, 0,02 bis 0,1 mm. Die Wellungen sind insbesondere so ausgebildet, daß der Matrixkörper eine Zelldichte von 50 bis 600 cpsi (cells per square inch) aufweist.

Vorzugsweise besteht die Matrix dabei in an sich bekannter Weise beispielsweise aus gepackten flachen Blechlagen oder aus einem spiralig, etwa evolventenförmig oder S-förmig im wesentlichen zylindrisch gewickelten Paket. Die einzelnen im Paket aneinanderliegenden Blechlagen können, müssen jedoch nicht, an den Berührungsbereichen verlötet sein.

Gemäß einer weiteren Ausgestaltung ist die Zelldichte des Matrixkörpers in Längsrichtung abschnittsweise variiert. Dies wird beispielsweise dadurch erreicht, daß zusätzliche Blechlagen mit einer geringeren Wellungshöhe bzw. geringerer Wellungsfrequenz als im entsprechenden benachbarten Abschnitt zwischen im wesentlichen glatten Blechlagen eingesetzt werden, wobei die glatten Blechlagen des Abschnitts mit der geringsten Zelldichte vorzugsweise in Längsrichtung der Matrix durchgängig angeordnet sind. Es ist außerdem möglich, die Zelldichte der Matrix in radialer Richtung zu variieren, indem eine Blechlage mit kontinuierlich in eine Richtung ansteigender Wellungsfrequenz beispielsweise zu einer im wesentlichen zylindrischen Wabenstruktur aufgewickelt wird.

Gemäß einer weiteren Ausgestaltung weisen die Blechlagen der Matrix im wesentlichen quer zur Richtung der Kanäle sickenartige Strukturen auf, welche auch als Transversalstrukturen bezeichnet werden. Diese Transversalstrukturen dienen dazu, daß bei Einleitung einer entsprechend hohen Bewegungsenergie die Verformung im Inneren des Matrixkörpers an den Transversalstrukturen zuerst einsetzt, um somit ein möglichst gleichmäßiges Aufnahmen der Bewegungsenergie durch den Matrixkörper zu gewährleisten. Vorzugsweise sind diese Transversalstrukturen in Abständen von 2 mm bis 20 mm angeordnet. Gemäß noch einem weiteren Ausführungsbeispiel weisen die Blechlagen des Matrixkörpers, durch welche die Kanäle gebildet sind, innerhalb der Kanäle seitlich versetzte Kanalabschnitte auf, welche auch als Longitudinalstrukturen bezeichnet werden. Diese Longitudinalstrukturen liefern somit keine durchgehenden Kanäle, sondern unterbrochene Kanäle, so daß der Matrixkörper im Inneren eine Struktur aufweist, welche einer Wirbelzellenstruktur, wie sie unter anderem für Wärmeübertrager eingesetzt wird, entspricht. Diese Longitudinalstrukturen besitzen den Vorteil, daß zusätzlich über die Länge der abschnittsweise versetzten Kanalabschnitte die die Bewegungsenergie absorbierenden Eigenschaften des erfindungsgemäßen Deformationselementes zielgerichtet beeinflußt werden können. Dadurch ist ein weiterer Parameter gegeben, das F,s-Profil anwendungsspezifisch zu beeinflussen.

Vorzugsweise ist es auch möglich, die Wellungen der Blechlagen in einer gekrümmten Anordnung oder einer Fischgrätanordnung oder in einer Kombination aus beiden vorzusehen. Mittels derartiger gekrümmter Wellungen oder in Fischgrätanordnung ausgebildeter Wellungen der Blechlagen kann eine Verteilung der in das Innere des Matrixkörpers eingeleiteten, die Verformung bewirkenden Kräfte zielgerichtet erreicht werden, wodurch ebenfalls das F,s-Profil anwendungsspezifisch beeinflußbar ist.

Vorzugsweise ist gemäß einer Weiterbildung der Erfindung der Matrixkörper bzw. sind dessen Kanäle mit einem Schaummaterial ausgeschäumt, wobei vorzugsweise das Schaummaterial ein insbesondere korrosionshemmender Kunststoffschaum ist. Damit wird einerseits, wenn beispielsweise kein nicht-rostender Stahl verwendet wird, verhindert, daß im Inneren der Matrix und der Radialverformungsbegrenzer Korrosion auftritt, welche die Deformationseigenschaften nachteilig beeinflussen kann. Andererseits kann durch Auswahl eines entsprechenden Kunststoffschaumes mit definierten Eigenschaften auch die Absorptionsfähigkeit von Bewegungsenergie in dem Element zielgerichtet beeinflußt werden, so daß auch über das Einbringen eines Schaummaterials, das F,s-Profil beeinflußbar ist.

Vorzugsweise ist durch eine geeignete Vielzahl von Solldeformationsstellen im Deformationselement dessen F,s-Profil zumindest in einem Abschnitt, vorzugsweise in einem großen Abschnitt und noch bevorzugter das gesamte F,s-Profil im wesentlichen konstant ausgebildet. Wenn beispielsweise eine Vielzahl von Solldeformationsstellen mit unterschiedlichen bewegungsenergie-aufnehmenden Eigenschaften im Deformationselement vorgesehen wird, ist es auch möglich, im F,s-Profil zumindest einen Abschnitt vorzusehen, welcher progressiv ansteigend ist.

Im Hinblick auf einen bezüglich einer definierten Baulänge zu erzielenden maximalen Deformationsweg ist das Deformationselement bezüglich seines Deformationsverhaltens so ausgelegt, daß der maximale Deformationsweg zwischen etwa 60 bis 200 mm liegt. Je nach Anwendungsfall kann der Deformationsweg auch kleiner oder größer als der angegebene Bereich sein.

Gemäß einem weiteren Ausführungsbeispiel der Erfindung weist der Matrixkörper Hohlräume auf, welche durch Wände gebildet werden, wobei die Wände Teile der jeweiligen Blechlagen, aus welchen der Matrixkörper aufgebaut ist, sind. Vorzugsweise ist das Deformationselement so an der Tragstruktur befestigt, daß bei einem Aufprall entwickelte Kräfte unter einem Winkel bezüglich einer Haupterstreckungsrichtung der Wände in diese einleitbar sind.

Vorzugsweise sind die Hohlräume auch als Kanäle ausgebildet, welche sich beispielsweise koaxial zur Längsachse des Matrixkörpers erstrecken. Wenn ein Deformationselement mit einem derartigen Matrixkörper so an der Tragstruktur befestigt ist, daß die bei einem Aufprall eingeleiteten Kräfte im wesentlichen in Richtung der Wände wirken, wird die Deformationsenergie unter anderem dadurch aufgenommen, daß die Wände eine Knickbelastung erfahren. Dadurch ergibt sich ein relativ starker Anstieg unmittelbar nach erfolgter Einleitung der Bewegungsenergie im F,s-Profil. Dieser steile Anfangsanstieg bzw. Anfangspeak im F,s-Profil führt dazu, daß relativ hohe Deformationskräfte über das Deformationselement, bevor dieses sich deformiert und dadurch Bewegungsenergie aufnimmt, in die Tragstruktur eingeleitet werden. Dadurch ist es möglich, daß die Tragstruktur plastische Verformungen infolge der Deformationskraftspitzen erfährt. Dies ist jedoch zu vermeiden.

Das Deformationselement ist erfindungsgemäß dabei so ausgebildet bzw. bezüglich der Tragstruktur so angeordnet, daß die bei einem Aufprall entwickelten Kräfte unter einem Winkel auf die bezüglich der Längsachse gebildete Haupterstreckungsrichtung der Wände eingeleitet werden. Durch eine derartige schräge Krafteinleitung wird erreicht, daß die Wände sich leichter, insbesondere bei Einsetzen der Verformung in die Hohlräume, deformieren, so daß der Anfangspeak im F,s-Profil zumindest stark reduziert wird. Mittels eines derartigen erfindungsgemäßen Deformationselementes kann somit auch der Anfangsbereich des F,s-Profils zielgerichtet im Sinne einer Verbesserung der Absorption von eingeleiteter Bewegungsenergie beeinflußt werden.

Vorzugsweise ist die Haupterstreckungsrichtung der die Wände bildenden Blechlagen unter einem Winkel bezüglich der Längsachse angeordnet. Dies kann beispielsweise durch schräges Wickeln der einzelnen strukturierten Blechlagen erzielt werden. Wenn die Haupterstreckungsrichtung der Wände mit der Längsachse einen Winkel bilden, so kann das Deformationselement so an der Tragstruktur befestigt werden, daß die Längsachse im wesentlichen senkrecht auf der Abstützung an der Tragstruktur angeordnet ist.

Es ist jedoch auch möglich, einen herkömmlichen Matrixkörper zu verwenden, dessen Haupterstreckungsrichtung der Wände im wesentlichen koaxial zu der Längsachse des Matrixkörpers verläuft, wobei der Matrixkörper an der Tragstruktur so befestigt ist, daß die Längsachse unter einem Winkel zu Abstützung an der Tragstruktur angeordnet ist.

Weitere Vorteile, Merkmale und Anwendungsmöglichkeiten der Erfindung werden nun anhand von Ausführungsbeispielen unter Bezugnahme auf die beigefügten Zeichnungen detailliert erläutert, wobei:
- Fig. 1: eine an sich bekannte Wabenstruktur eines Matrixkörpers eines Deformationselementes im unverformten Zustand zeigt;
- Fig. 2: die Anordnung eines Matrixkörpers in der Tragstruktur mit Radialverformungsbegrenzern gemäß einer ersten Ausführungsform der Erfindung zeigt;
- Fig.3: die Anordnung eines Matrixkörpers in der Tragstruktur mit Radialverformungsbegrenzern gemäß einer zweiten Ausführungsform der Erfindung zeigt;
- Fig.4: die Anordnung eines Matrixkörpers in der Tragstruktur mit Radialverformungsbegrenzern gemäß einer dritten Ausführungsform der Erfindung zeigt;
- Fig. 5: eine prinzipielle Darstellung eines Radialverformungsbegrenzers in Form eines Mantelrohres zur Aufnahme eines zylindrischen wabenförmigen Matrixkörpers zeigt;
- Fig. 6: eine Schnittansicht eines Deformationselementes gemäß der Erfindung mit vereinfachter Darstellung des Matrixkörpers zeigt;
- Fig. 7: das Deformationselement gemäß Fig. 6 in deformiertem Zustand zeigt;
- Fig. 8: die prinzipielle Anordnung eines durch die Tragstruktur einseitig aufgenommenen Deformationselementes gemäß der Erfindung zeigt;
- Fig. 9: den prinzipiellen Herstellungsvorgang eines wabenförmigen Matrixkörpers zeigt;
- Fig. 10: einen Schnitt in Richtung der Kanäle des wabenförmigen Matrixkörpers zeigt, wobei in Richtung der Kanäle eine unterschiedliche Zelldichte realisiert ist;
- Fig. 11: ein Deformationselement gemäß einem weiteren Ausführungsbeispiel der Erfindung mit einem Matrixkörper mit in radialer Richtung variierender Zelldichte zeigt;
- Fig. 12: ein Deformationskraft-Deformationsweg-Profil (F,s-Profil) eines ersten Ausführungsbeispiels der Erfindung zeigt;
- Fig. 13: ein F,s-Profil eines zweiten Ausführungsbeispiels gemäß der Erfindung zeigt;
- Fig. 14: eine prinzipielle Anordnung eines Deformationselementes an der Tragstruktur gemäß einer ersten Ausführungsform der Erfindung zeigt;
- Fig. 15: eine prinzipielle Anordnung eines Deformationselementes an der Tragstruktur gemäß einer zweiten Ausführungsform der Erfingung zeigt; und
- Fig. 16: eine prinzipielle Anordnung eines Deformationselementes an der Tragstruktur gemäß einer dritten Ausführungsform der Erfindung zeigt.

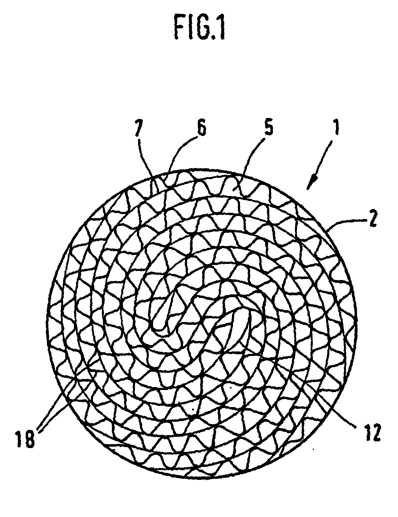

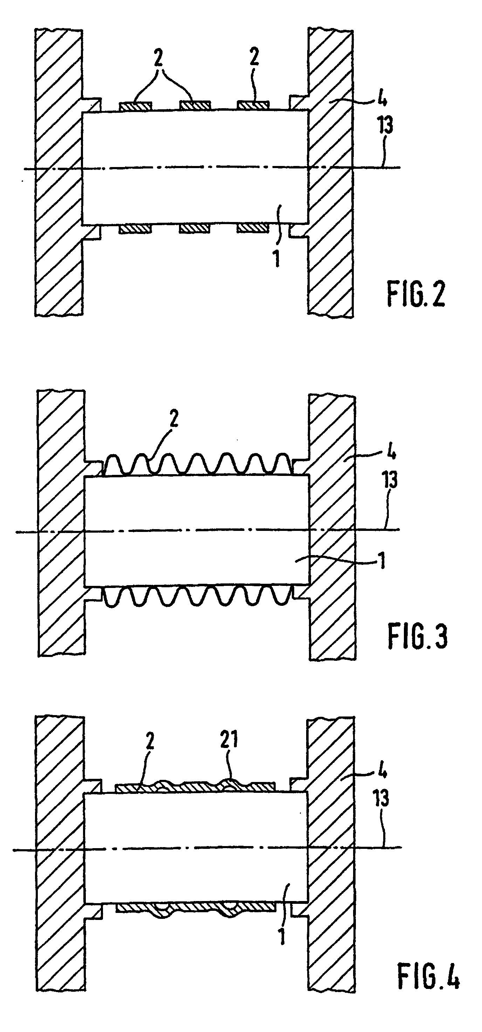

In Fig. 1 ist eine Querschnittansicht eines wabenförmigen Matrixkörpers 1 dargestellt. Der wabenförmige Matrixkörper 1 ist aus sich abwechselnden gewellten Blechlagen 6 und im wesentlichen glatten Blechlagen 7 mit zwei Spiralarmen 12 gewickelt. Die glatten Blechlagen 7 liegen auf den Wellungen der gewellten Blechlagen 6 im wesentlichen auf, so daß eine Vielzahl von Kanälen 5 im Innern des Matrixkörpers gebildet ist. Diese Kanäle 5 sind durch Wände 18, welche durch die Blechlagen 6, 7 gebildet sind, voneinander getrennt. Der Matrixkörper 1 ist mit einer Ummantelung 2 umgeben. Dadurch ist das Deformationselement sehr kompakt ausgebildet. Ein derartiges Deformationselement ist so in einer Tragstruktur 4 (siehe Fig. 2, 3, 4) angeordnet, daß die Bewegungsenergie, welche mit dem Deformationselement absorbierbar ist, im wesentlichen unter einem Winkel zur Längsachse 13 des Deformationselementes eingeleitet wird.

In den Fig. 2 bis 4 sind drei Ausführungsbeispiele fiir den Matrixkörper 1 umgebende Radialverformungsbegrenzer 2 dargestellt. Der Matrixkörper 1 des Deformationselementes ist bezüglich seiner Längsachse 13 im wesentlichen senkrecht zu der Abstützung an der Tragstruktur 4 angeordnet. Gemäß Fig. 2 ist der Matrixkörper 1 von drei umlaufenden Ringen umgeben, welche die Funktion von Radialverformungsbegrenzern aufnehmen. Die Breite der Ringe ist dabei so bemessen, daß die Summe der Breiten aller Ringe kleiner ist als die Restblocklänge des Matrixkörpers 1 nach vollständiger Kompression. Die Radialverformungsbegrenzer 2 weisen eine solche Festigkeit auf, daß sie während des Deformierens ein Ausweichen von Teilen des Matrixkörpers 1 aus der im wesentlichen in Richtung der Längsachse 13 gerichteten Deformation im wesentlichen verhindern. Dadurch, daß die Gesamtbreite aller drei Verformungsbegrenzer kleiner ist als Restblocklänge des Matrixkörpers 1, beeinflussen diese Radialverformungsbegrenzer 2 das F,s-Profil des Deformationselementes allenfalls nur unwesentlich.

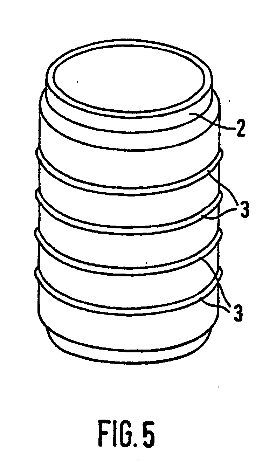

In Fig. 3 ist ein weiteres Ausführungsbeispiel dargestellt. Bei diesem Ausführungsbeispiel ist ein Radialverformungsbegrenzer 2 vorgesehen, welcher als eine Ummantelung in Form eines faltenbalgartigen Wellschlauches ausgebildet ist. Dieser faltenbalgartige Wellschlauch weist in axialer Richtung, d.h. in Richtung der Längsachse 13, in welcher die eigentliche Deformation des Deformationselementes erfolgen soll, nur eine geringe Steifigkeit auf. Der Wellschlauch ist jedoch so dimensioniert, daß er eine relativ große Festigkeit in radialer Richtung aufweist, so daß er als Radialverformungsbegrenzer arbeitet. Dadurch, daß die Axialsteifigkeit des Wellschlauches gering ist, beeinflußt der Wellschlauch beim Deformieren des Matrixkörpers 1 dessen F,s-Profil allenfalls nur unbedeutend.

In Fig. 4 ist ein weiteres Ausführungsbeispiel der Erfindung dargestellt. Der Radialverformungsbegrenzer 2 ist dabei aus einzelnen Ringen (siehe Fig. 2) aufgebaut, welche durch sickenartige gewellte Verbindungsabschnitte 21 verbunden sind. Die Kombination einzelner ringförmiger Radialverformungsbegrenzer mit Elementen des als Wellschlauch ausgebildeten Verformungsbegrenzers gemäß Fig. 3 macht Gebrauch von den Vorteilen beider Ausführungsformen. Die gesamte axiale Länge des Radialverformungsbegrenzers 2 ist dabei so bemessen, daß beim Komprimieren des Matrixkörpers 1 infolge des Aufnehmens von Bewegungsenergie der als Ummantelung ausgebildete Radialverformungsbegrenzer 2 so deformiert wird, insbesondere an den Verbindungsabschnitten 21, daß das F,s-Profil des Matrixkörpers 1 nicht wesentlich beeinflußt wird. Die Axialsteifigkeit des Verformungsbegrenzers 2 ist ebenfalls gering, so daß auch bei diesem Ausführungsbeispiel der Matrixkörper 1 ein selbsttragendes Deformationselement darstellt.

In Fig. 5 ist schematisch ein Radialverformungsbegrenzer 2 in Form eines Mantelrohres fiir ein Deformationselement dargestellt. Dieses Deformationselement weist am Außenumfang umlaufende Sicken 3 auf. Der Radialverformungsbegrenzer ist so dimensioniert, daß die Deformationseigenschaften dieses Deformationselementes im Hinblick auf das F,s-Profil nicht wesentlich beeinflußt werden. Es ist des weiteren möglich, daß die Sicken 3 sich nur jeweils über einen Teilbereich des Umfangs des Mantekohres erstrecken oder daß diese Sicken auf einer Schraubenlinie um den Außenumfang des Mantelrohres zumindest abschnittsweise umlaufen.

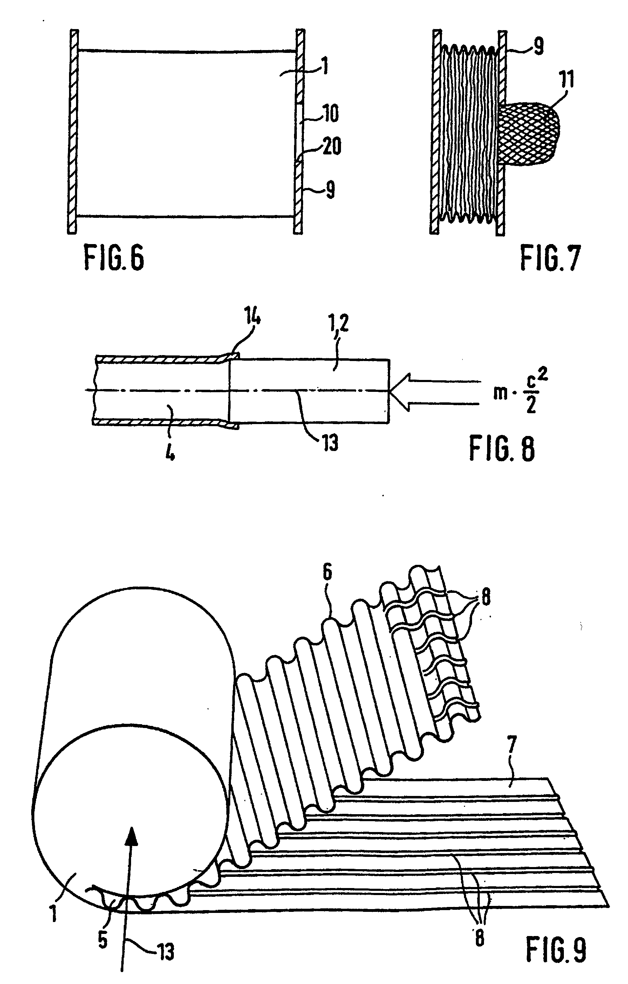

In Fig. 6 ist ein erfindungsgemäßes Deformationselement zur Verwendung in einer Tragstruktur 4 gemäß der Erfindung dargestellt. Das Deformationselement ist im Schnitt dargestellt, wobei aus Gründen der vereinfachten Darstellung der Schnitt durch den an sich bekannten Matrixkörper 1 ohne Darstellung der einzelnen Kanäle 5 bzw. Hohlräume des Matrixkörpers 1 dargestellt ist. Der Matrixkörper 1 ist selbsttragend und stellt das eigentliche Deformationselement dar. Das dargestellte Deformationselement ist in die Tragstruktur 4 so eingebaut, daß die Bewegungsenergie von links eingeleitet wird. Beim Einleiten von Bewegungsenergie nimmt das Deformationselement die Bewegungsenergie auf und setzt sie in entsprechende Deformationsenergie um, so daß sich ein definierter Deformationsweg ergibt. Die Stirnseiten des Deformationselementes sind mit jeweiligen Stützplatten (nicht gezeigt) abgedeckt. Die der Einleitung der Bewegungsenergie gegenüberliegende Stirnseite 19 des Deformationselementes ist in Form einer Lochplatte 9 ausgebildet, welche im zentralen Bereich ein Loch 10 aufweist. Das Loch 10 ist groß genug ausgebildet, daß sich infolge der Stauch- und Scherkräfte beim Einleiten entsprechend hoher Bewegungsenergien das Deformationselement vor Erreichen der Restblocklänge noch weiter komprimieren läßt, so daß eine verkürzte Restblocklänge erzielbar ist.

Gemäß Fig. 7 wird dies dadurch erreicht, daß sich vor Erreichen der Restblocklänge Material des Matrixkörpers, welches sich im Bereich des Loches 10 der Lochplatte 9 befindet, bei entsprechend großer eingeleiteter Bewegungsenergie längs des Deformationsweges durch das Loch 10 hindurchschieben und damit aus dem eigentlichen Deformationselement herausschieben kann. Dadurch entsteht ein zumindest teilweise abgescherter Materialteil 11, welcher gewährleistet, daß die Restblocklänge eines solchen Deformationselementes bei gegebenen Bauabmessungen weiter verringert werden kann. Dadurch können höhere Deformationsenergien aufgenommen werden, ohne daß die Gefahr besteht, daß die Tragstruktur 4, an welcher das Deformationselement abgestützt ist, Schaden nimmt.

Aus den Fig. 1 bis 7 ist ersichtlich, daß über das Design der Radialverformungsbegrenzer (Einzelringe, Wandstärke, mit oder ohne Mantelsicken), Matrixkörperdesign (Zelldichte, Dicke der Blechlage) und Matrixkörper (Standardmaterial, TS-Standard oder walzplattiertes Band) das F,s-Profil des erfindunsggemäßen Deformationselementes gezielt für den jeweiligen Einsatzfall beeinflußbar ist.

Fig. 8 zeigt die prinzipielle Anordnung eines durch eine Tragstruktur 4 aufgenommenen Deformationselementes. Das Deformationselement ist dabei einseitig von der Tragstruktur 4 abgestützt. Auf der der Abstützung 14 gegenüberliegenden Seite des Deformationselementes wird die Bewegungsenergie in Richtung der Längsachse 13 eingeleitet, welche durch m x c²/2 dargestellt ist. Die Aufgabe des Deformationselementes besteht darin, die eingeleitete Bewegungsenergie in Verformung umzusetzen, wobei diese Verformung im Auslegungsfall des Deformationselementes nur durch dieses selbst aufgenommen werden soll, ohne daß die Tragstruktur 4 deformiert bzw. beschädigt wird. Ein so dimensioniertes Deformationselement bildet somit ein Austauschteil, welches in der Tragstruktur 4 so abgestützt ist, daß es leicht demontiert und durch ein neues ersetzt werden kann. Dies spielt insbesondere eine große Rolle bei Kraftfahrzeugen, wenn ein derartiges Deformationselement für ein Stoßfängersystem eingesetzt ist.

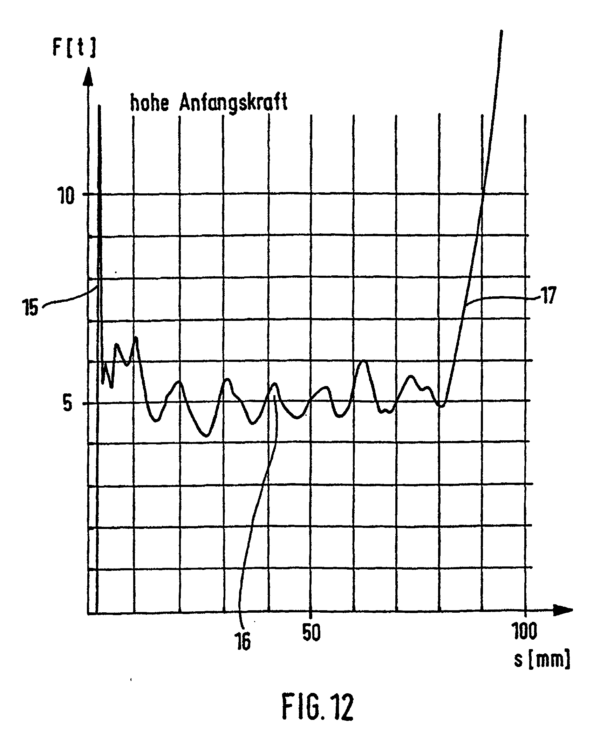

In Fig. 9 ist ein weiteres Ausführungsbeispiel für den prinzipiellen Aufbau der Struktur eines Matrixkörpers für ein Deformationselement gezeigt. Der wabenförmige Matrixkörper weist einen Aufbau auf, bei welchem strukturierte, mit einer Wellung versehene Blechlagen 6 in abwechselnder Reihenfolge mit im wesentlichen glatten Blechlagen 7 spiralig zu einer im wesentlichen zylindrischen Form gewickelt sind. Durch die Wellungen weist der wabenförmige Matrixkörper 1 Kanäle 5 auf, welche sich in Richtung der durch den Pfeil angedeuteten Längsachse 13 erstrecken. Darüber hinaus weisen sowohl die gewellten Blechlagen 6 als auch die im wesentlichen glatten Blechlagen 7 des Matrixkörpers 1 zusätzlich Mikrostrukturen 8 auf, welche im wesentlichen quer zur Längserstreckung der Kanäle 5 verlaufen. Diese Mikrostrukturen 8 stellen für den Deformationsvorgang bei Einwirken entsprechender Bewegungsenergie Solldeformationsstellen dar, durch welche insbesondere zu Beginn des Deformationsvorganges ein ansonsten auftretender, sich im F,s-Profil darstellender übermäßiger Anfangspeak 15 (siehe Fig. 12) abbaubar ist.

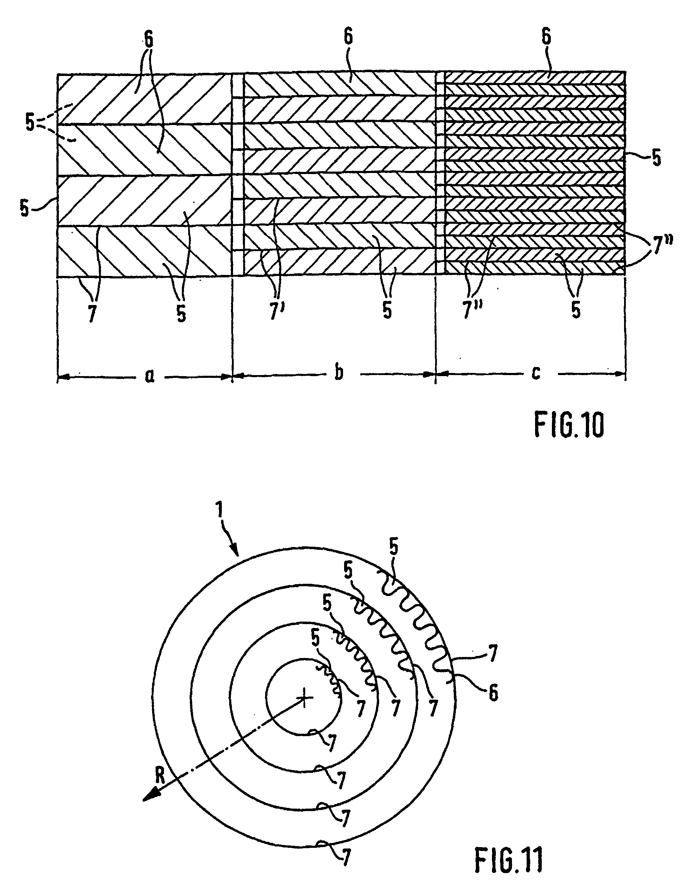

In Fig. 10 ist ein weiteres Ausführungsbeispiel dargestellt. Bei diesem Ausführungsbeispiel weist das Deformationselement drei Bereiche a, b, c auf, in welchen jeweils unterschiedliche Zelldichten realisiert sind. Die Darstellung gemäß Fig. 10 ist ein Schnitt in Richtung der Kanäle 5. In Richtung der Kanäle 5 erstrecken sich über die Länge des Deformationselementes a + b + c glatte Blechlagen 7. Im Abschnitt a ist zwischen glatten Blechlagen 7 jeweils eine strukturierte Blechlage 6 mit einer Wellungsamplitude angeordnet, welche dem in radialer Richtung gemessenen Abstand zwischen den glatten Blechlagen 7 entspricht. Im Abschnitt b und c sind zusätzlich glatte Blechlagen 7' zwischen den Blechlagen 7 angeordnet, wobei zwischen den glatten Blechlagen 7 und 7' im Abschnitt b gewellte Blechlagen 6 angeordnet sind, welche eine Wellungsamplitude aufweisen, welche dem Abstand zwischen den Blechlagen 7 und 7' entspricht. Im Abschnitt c sind zusätzlich zwischen den glatten Blechlagen 7 und 7' weitere glatte Blechlagen 7" angeordnet, so daß zwischen den glatten Blechlagen 7, 7' und 7" gewellte Blechlagen 6 angeordnet sind, deren Wellungsamplitude dem Abstand zwischen den glatten Blechlagen 7 und 7" bzw. 7" und 7' entsprechen. Dadurch entsteht ein in Längsrichtung der Kanäle 5 mit einer variierenden Zelldichte ausgebildetes Deformationselement. Der Vorteil eines solchen Deformationselementes mit variierender Zelldichte besteht darin, daß das F,s-Profil in einzelnen Bereichen des Deformationselementes abschnittsweise gezielt beeinflußbar ist. Damit wird wiederum die Flexibilität der Anwendungsmöglichkeiten des Deformationselementes gemäß der Erfindung erhöht.

Fig. 11 zeigt ein weiteres Ausführungsbeispiel eines Deformationselementes, bei welchem der wabenförmige Matrixkörper 1 aus im wesentlichen konzentrisch verlaufenden, abwechselnd angeordneten glatten 7 und strukturierten Blechlagen 6 aufgebaut ist, wobei die strukturierten Blechlagen 6 in der Wellungsamplitude in Richtung des Radius R von innen nach außen zunehmen. Aus Gründen der einfachen Darstellung ist nur ein Teil der glatten Blechlage und ein Teil der mit Wellungen versehenen strukturierten Blechlagen 6 eingezeichnet. Durch die Wellungen der strukturierten Blechlagen 6 werden die Kanäle 5 gebildet. Um eine vom Inneren einer zylindrischen Matrixstruktur 1 nach außen zunehmende Zelldichte zu erzielen, ist es auch möglich, daß der Matrixkörper 1 aus einer glatten Blechlage 7 und einer darauf angeordneten strukturierten Blechlage mit einer in einer Richtung zunehmenden Amplitude der Wellung spiralig aufgewickelt ist. Dadurch entsteht eine kontinuierliche Zunahme der Zelldichte eines derartigen wabenförmigen Matrixkörpers 1 in Richtung des Radius R von innen nach außen.

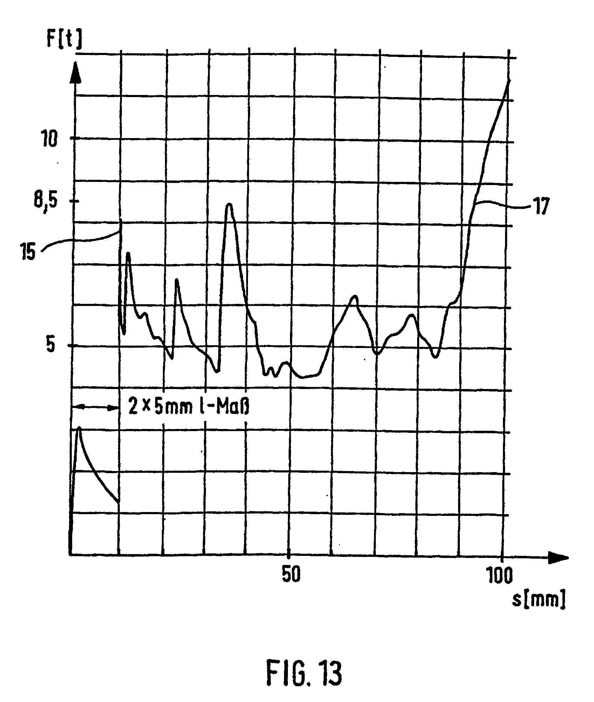

In den Fig. 12 und 13 ist beispielhaft jeweils ein F,s-Profil dargestellt. Diese F,s-Profile wurden ermittelt bei Testversuchen mit dem Matrixkörpermaterial aus Chrom und Aluminium enthaltendem Stahl (Standardmaterial). Als Matrixkörperdesign wurden 160 cpsi, 100 cpsi und 0 cpsi (nur Stauchung eines Mantels aus walzplattiertem Stahl) untersucht. Als Ummantelungsdesign wurde ein Mantel ohne Sicken, ein Mantel mit drei Sicken und ein Mantel mit acht Sicken untersucht. Als Ummantelungswandstärke wurden 0,5 mm und 0,8 mm eingesetzt. Das untersuchte Deformationselement hatte eine zylindrische Form. Die Ummantelung 2 besaß einen Überstand gegenüber dem eigentlichen wabenförmigen Matrixkörper 1 von jeweils 5 mm auf jeder Seite. Eine Lochplatte war nicht vorgesehen.

Aus Fig. 12 ist beispielhaft ein Versuchsergebnis ersichtlich, daß bei Beginn der Einleitung von entsprechender Bewegungsenergie im Deformationselement eine hohe Anfangskraft von ca. 130 kN als Spitzenkraft zu Beginn auftritt, bevor die eigentliche Deformation bei Kräften zwischen 40 und 65 kN stattfindet. Bei dem dargestellten F,s-Profil ist der Mittelbereich 16, welcher dem Anfangspeak 15 folgt, im wesentlichen konstant ausgebildet, d.h. im Mittelbereich 16 schwankt die Kraft lediglich in relativ geringem Maße um einen Mittelwert von ca. 50 kN. Bei Erreichen des Endverformungszustandes (Restblocklänge), welcher bei dem untersuchten Deformationselement bei ca. 85 mm lag, setzt der Endanstieg 17 ein. Das bedeutet, daß bei weiterer Erhöhung der Druckbelastung auf das Deformationselement kaum noch ein Deformationsweg auftritt.

Werden zusätzliche Sicken in den Radialverformungsbegrenzer 2 eingebracht, wie es in Fig. 5 dargestellt ist, so verformen sich zunächst die Sicken 3. Das bedeutet, daß zunächst der Matrixkörper 1 in der Ummantelung gleitet, bis die jeweiligen Schenkel der Sicken 3 unter einer Kraft von ca. 25 bis 10 kN (siehe Fig. 13) aufeinandergefaltet sind. Erst danach erfolgt gemäß Fig. 13 ein Sprung, welcher den eigentlichen Anfangspeak 15 darstellt, auf ca. 85 kN. Indem die Materialdicke der Ummantelung von 0,8 mm auf 0,5 mm reduziert wird, kann der Anfangspeak 15, d.h. die Anfangskraft abgesenkt werden. Bedingt durch das dünnere Material ist die verbleibende Resthöhe eines derartigen flachgedrückten Deformationselementes etwas geringer als bei einem Material mit einer Dicke von 0,8 mm. Das bedeutet, daß der maximale Deformationsweg größer ist.

Bei einer Stärke der Ummantelung von 0,8 mm und einer Anordnung von drei Sicken kann ebenfalls die Höhe des Anfangspeaks 15 etwas gesenkt werden. Bei einer Anordnung von acht Sicken in einer Ummantelung mit einer Dicke von 0,8 mm konnte der Anfangspeak 15 nicht weiter reduziert werden.

Wenn die Ummantelung mit einem Überstand von jeweils 5 mm auf jeder Stirnseite des Matrixkörpers 1 vorgesehen ist, so wirkt dieser Überhang als Deformationsvorstufe. Nachdem diese Deformationssstufe beim Deformationsvorgang "aufgebraucht" ist, stellt die Ummantelung einen Radialverformungsbegrenzer dar, welcher bei Vorhandensein einer entsprechenden Anzahl von Sicken das F,s-Profil nicht wesentlich beeinflußt.

Während das F,s-Profil gemäß Fig. 13 für einen Matrixkörper 1 mit 100 cpsi aufgenommen wurde, entspricht das F,s-Profil gemäß Fig. 12 einem Matrixkörper 1 mit 160 cpsi. Aus dem Vergleich beider F,s-Profile ist ersichtlich, daß mit steigender Zelldichte die mittlere Verformungskraft im Mittelbereich 16 des F,s-Profils nicht nur verringert, sondern auch deutlich gleichmäßiger ausgebildet werden kann. Ein gleichmäßig ausgebildeter Mittelbereich 16 des F,s-Profils hat den Vorteil, daß die Bewegungsenergie durch das Deformationselement gleichmäßig absorbiert wird, was die Belastungen für die das Deformationselement abstützende Tragstruktur 4 und damit das Risiko, daß diese Tragstruktur 4 beschädigt wird, verringert.

Gegenüber Standardmaterial kann bei Verwendung eines Materials für die strukturierte Blechlage 6 in TS-Wellung die mittlere Deformationskraft im Mittelbereich 16 des F,s-Profils ebenfalls reduziert werden. Eine weitere Reduzierung ist erreichbar, indem anstelle der TS-Wellung walzplattiertes Band verwendet wird.

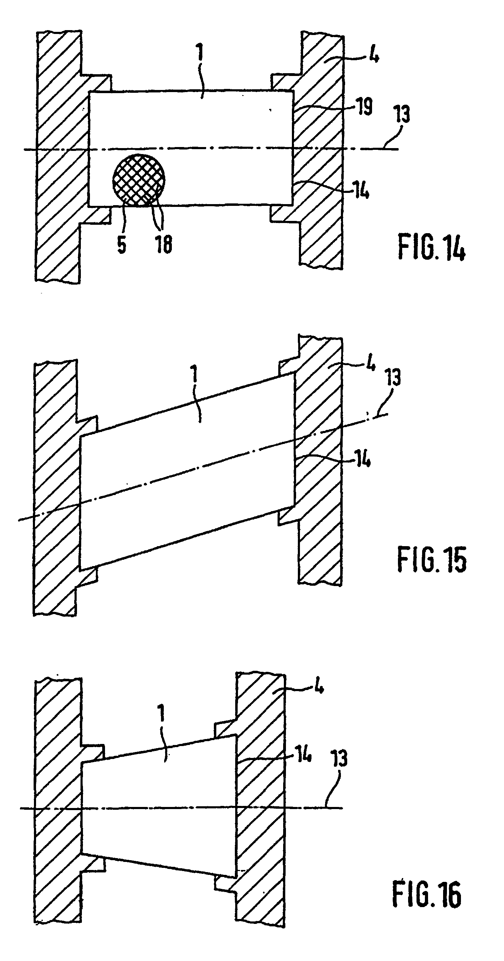

Die Fig. 14 bis 16 zeigen drei Ausführungsbeispiele der Anordnung des Matrixkörpers 1 bezüglich der Tragstruktur 4. Der Matrixkörper 1 des Deformationselementes ist bezüglich seiner Längsachse 13 im wesentlichen senkrecht zu der Abstützung 14 an der Tragstruktur 4 angeordnet. Die Stirnseite 19 des Matrixkörpers 1 liegt an einer entsprechenden Fläche der Tragstruktur 4 an, welche auch Löcher bzw. Ausnehmungen aufweisen kann. Der Matrixkörper 1 ist dabei aus schräg gelegten, gewickelten oder geschlungenen strukturierten Blechlagen aufgebaut, wobei die so strukturierten Blechlagen entweder schräg zueinander gewickelt, geschlungen oder gelegt sind oder zwischen den schräg zueinander gelegten strukturierten Blechlagen 6 noch glatte Blechlagen 7 angeordnet sein können. Dies ist in Fig. 14 veranschaulichend in dem Kreis dargestellt, welcher eine abgewickelte Draufsicht auf die kreuzweise übereinanderliegenden Blechlagen in vereinfachter Darstellung zeigt. Bei derartig angeordneten Blechlagen ergeben sich kreuzweise ausgerichtete Kanäle 5, welche durch Wände begrenzt sind, welche einen Winkel zur Längsachse 13 des Matrixkörpers 1 bilden. Durch diese schräge Anordnung der Wände 18 erfolgt eine Krafteinleitung unter einem Winkel bezüglich der Haupterstreckungsrichtung der Wände 18.

Entsprechend einem weiteren Ausführungsbeispiel der Erfindung, welche in Fig. 15 dargestellt ist, ist der Matrixkörper 1 so aufgebaut, daß seine Längsachse 13 unter einem Winkel bezüglich der Abstützung 14 an der Tragstruktur 4 liegt. Ein derartig angeordneter Matrixkörper 1 kann in an sich bekannter Weise gewickelt, geschlungen oder gepackt sein, daß die durch die Wände gebildeten Kanäle sich im wesentlichen koaxial zur Längsachse 13 erstrecken. Es ist jedoch auch möglich, daß bei einer Anordnung gemäß dem Ausführungsbeispiel nach Fig. 15 die einzelnen Blechlagen mit ihren Strukturierungen kreuzweise bzw. winklig bezüglich der Längsachse 13 angeordnet sind. Auch in diesen beiden genannten Fällen erfolgt eine Krafteinleitung unter einem Winkel bezüglich der Haupterstreckungsrichtung der Wände 18.

Gemäß einem weiteren Ausführungsbeispiel der Erfindung, welches in Fig. 16 dargestellt ist, ist der Matrixkörper 1 als kegelstumpfförmiger Matrixkörper ausgebildet. Bei einem derartig ausgebildeten Matrixkörper 1 ist die Längsachse 13 im wesentlichen senkrecht bezüglich der Abstützung 14 an der Tragstruktur 4 angeordnet. Außer dem unmittelbar die Längsachse 13 umgebenden Bereich ist die Haupterstreckungsrichtung der Wände unter einem Winkel bezüglich der in Richtung der Längsachse 13 bei einem Aufprall eingeleiteten Kräfte angeordnet. Dadurch wird bei einem solchen kegelstumpfförmigen Matrixkörper 1 zumindest ein Teil der bei dem Aufprall entwickelten Kräfte unter einem Winkel in die jeweiligen Wände eingeleitet.

Beim Einleiten von Bewegungsenergie können sich die die Kanäle begrenzenden Wände der jeweiligen Blechlage in die entsprechenden Kanalräume deformieren, so daß ein derartiges Deformationselement theoretisch so viel bzw. so lange Bewegungsenergie absorbieren kann, solange noch Hohlräume in dem Matrixkörper 1 vorhanden sind. Die Bewegungsenergie wird dabei sowohl von dem wabenförmigen Matrixkörper 1 aufgenommen. Die Ummantelung ist so ausgebildet, daß sie nicht bzw. nicht wesentlich zur Aufnahme von Bewegungsenergie dient, sondern lediglich als Radialverformungsbegrenzer ausgebildet ist. Nach Aufnahme von so viel Bewegungsenergie, daß sich die die Wände bildenden Teile der jeweiligen Blechlagen in die in den Kanälen vorhandenen Freiräume vollständig deformiert haben, erreicht das Deformationselement seine Endkompressionslänge, welche als Restblocklänge bezeichnet wird. Nachdem die Restblocklänge des Deformationselementes erreicht ist, ist ein weiteres Komprimieren über diese Restblocklänge hinaus nur mit einem extremen Anstieg der zur weiteren Kompression erforderlichen Kräfte möglich. Für praktische Einsatzzwecke bedeutet dies, daß bei Erreichen dieses im wesentlichen den Enddeformationszustand des Deformationselementes darstellenden Zustandes selbst bei starkem Anstieg der eingeleiteten Kräfte kaum noch Deformationsvermögen vorhanden ist. Dadurch kann eine Schädigung der Tragstruktur, an welcher das Deformationselement abgestützt ist, auftreten. Dieser Endanstieg 17 ist in Fig. 12 dargestellt.

### Bezugszeichenliste

- 1: Matrixkörper
- 2: Radialverformungsbegrenzer
- 3: Sicken
- 4: Tragstruktur
- 5: Kanäle
- 6: gewellte Blechlage
- 7: glatte Blechlage
- 8: Mikrostruktur
- 9: Lochplatte
- 10: Loch
- 11: abgeschertes Materialteil
- 12: Spiralarm
- 13: Längsachse
- 14: Abstützung
- 15: Anfangspeak
- 16: Mittelbereich
- 17: Endanstieg
- 18: Wände
- 19: Stirnseite
- 20: Rand des Loches
- 21: Verbindungsabschnitt

## Patentansprüche

1. Tragstruktur mit einem Deformationselement für ein Kraftfahrzeug zur Absorption von Bewegungsenergie bei einem Aufprall, welches bis zu einer Restblocklänge deformierbar ist, mit der Tragstruktur (4) verbunden ist und einen wabenförmigen Matrixkörper (1) aufweist,
**dadurch gekennzeichnet, daß**
der Matrixkörper (1) des Deformationselementes selbsttragend ausgebildet ist und zumindest einen Radialverformungsbegrenzer (2) mit geringerer Axialsteifigkeit als der des Matrixkörpers aufweist,
wobei der mindestens eine Radialverformungsbegrenzer (2) an mindestens zwei voneinander beabstandeten axialen Teilbereichen des Matrixkörpers (1) angeordnet ist.

2. Tragstruktur nach Anspruch 1, **dadurch gekennzeichnet, daß** der Radialverformungsbegrenzer (2) als Ummantelung ausgebildet ist und den Matrixkörper (1) zumindest teilweise umgibt.

3. Tragstruktur nach Anspruch 1 oder 2, **dadurch gekennzeichnet, daß** das Verhältnis zwischen der Axialsteifigkeit des Radialverformungsbegrenzers und der des Matrixkörpers 1 : 5 bis 1 : 50 beträgt, vorzugsweise kleiner als 1 : 10 ist.

4. Tragstruktur nach Anspruch 1, 2 oder 3, **dadurch gekennzeichnet, daß** der Radialverformungsbegrenzer (2) um den Matrixkörper (1) in Form von beabstandeten Mantelringen ausgebildet ist.

5. Tragstruktur nach einem der vorhergehenden Ansprüche, **dadurch gekennzeichnet, daß** der Radialverformungsbegrenzer (2) als faltenbalgartiger Wellschlauch mit Sollknickstellen ausgebildet ist, dessen Innendurchmesser so dimensioniert ist, daß seine Welltäler die Umfangsoberfläche des Matrixkörpers (1) im wesentlichen berühren.

6. Tragstruktur nach Anspruch 5, **dadurch gekennzeichnet, daß** die Wellungen des Wellschlauches so ausgebildet sind, daß sie zu Beginn des Deformationsvorganges als Initialkeime für Knick- und/oder Faltstellen des Radialverformungsbegrenzers (2) wirken.

7. Tragstruktur nach einem der vorhergehenden Ansprüche, **dadurch gekennzeichnet, daß** das Deformationselement so deformierbar ist, daß die Restblocklänge des Radialverformungsbegrenzers (2) kleiner oder gleich der Restblocklänge des Matrixkörpers (1) ist.

8. Tragstruktur nach einem der vorhergehenden Ansprüche, **dadurch gekennzeichnet, daß** das Deformationselement zumindest an einer Stirnseite (19), an welcher sich eine Abstützung (14) an der Tragstruktur (4) befindet, eine Lochplatte (9) mit zumindest einem Loch (10) aufweist, das so dimensioniert ist, daß im Bereich des Loches (10) befindliche Teile des Matrixkörpers (1) in Richtung des Deformationsweges versetzbar sind.

9. Tragstruktur nach Anspruch 8, **dadurch gekennzeichnet, daß** die Lochplatte (9) mehrere gleichmäßig verteilte Löcher (10) aufweist, wobei der Rand (20) des jeweiligen Loches (10) über mehrere Blechlagen (6, 7) verläuft, vorzugsweise über mindestens fünf, insbesondere über mindestens zehn.

10. Tragstruktur nach Anspruch 8 oder 9, **dadurch gekennzeichnet, daß** die Löcher (10) im Außenbereich der Lochplatte (9) angeordnet sind.

11. Tragstruktur nach einem der Ansprüche 8 bis 10, **dadurch gekennzeichnet, daß** 20 bis 80 %, insbesondere 40 bis 60 %, der Gesamtfläche der Lochplatte (9) Löcher (10) sind.

12. Tragstruktur nach einem der Ansprüche 8 bis 11, **dadurch gekennzeichnet, daß** die Lochplatte (9) mit ihrem Rand (20) in die Abstützung (14) der Tragstruktur (4) integriert ist.

13. Tragstruktur nach einem der Ansprüche 5 bis 12, **dadurch gekennzeichnet, daß** die Sollknickstellen als im wesentlichen umlaufende Sicken (3) ausgebildet sind.

14. Tragstruktur nach einem der Ansprüche 2 bis 13, **dadurch gekennzeichnet, daß** die Ummantelung eine Dicke von 0,3 mm bis 2,0 mm aufweist, vorzugsweise bei einem Mantel aus Aluminium 0,5 bis 2,0 mm und bei einem Mantel aus Stahl, insbesondere Tiefziehstahl, 0,3 bis 1,5 mm.

15. Tragstruktur nach einem der vorhergehenden Ansprüche, **dadurch gekennzeichnet, daß** der Matrixkörper (1) aus insbesondere gewellten Blechlagen (6, 7) mit einer Vielzahl von Kanälen (5) besteht, wobei die Blechlagen (6, 7) eine Dicke von 0,02 mm bis 0,2 mm aufweisen, vorzugsweise bei Aluminiumblechen eine Dicke von 0,05 bis 0,2 mm und bei Stahlblechen, insbesondere aus Tiefziehstahl, 0,02 bis 0,15 mm, und der Matrixkörper (1) eine Zelldichte von 50 bis 600 cpsi (cells per square inch) besitzt.

16. Tragstruktur nach Anspruch 15, **dadurch gekennzeichnet, daß** der Matrixkörper (1) aus zumindest teilweise strukturierten Blechlagen (6) gestapelt ist oder zu einem im wesentlichen zylindrischen Paket spiralig, etwa evolventenförmig oder S-förmig gewickelt oder geschlungen ist.

17. Tragstruktur nach Anspruch 15 oder 16, **dadurch gekennzeichnet, daß** die Zelldichte des Matrixkörpers (1) in Richtung der Kanäle (5) abschnittsweise variiert.

18. Tragstruktur nach einem der Ansprüche 15 bis 17, **dadurch gekennzeichnet, daß** die Blechlagen (6, 7) des Matrixkörpers (1) quer oder schräg zur Richtung der Kanäle (5) sickenartige Strukturen (8) (Transversalstrukturen) aufweisen, wobei die sickenartigen Strukturen (8) des Matrixkörpers (1) insbesondere in Abständen von 2 mm bis 20 mm angeordnet sind.

19. Tragstruktur nach einem der Ansprüche 15 bis 18, **dadurch gekennzeichnet, daß** die Blechlagen (6, 7) des Matrixkörpers (1), durch welche die Kanäle (5) gebildet sind, seitlich versetzte Kanalabschnitte (Longitudinalstrukturen) aufweisen.

20. Tragstruktur nach einem der Ansprüche 15 bis 19, **dadurch gekennzeichnet, daß** die Wellungen der Blechlagen (6, 7) des Matrixkörpers (1) eine gekrümmte oder eine Fischgrät-Anordnung aufweisen.

21. Tragstruktur nach einem der vorhergehenden Ansprüche, **dadurch gekennzeichnet, daß** der wabenförmige Matrixkörper (1) mit einem Schaummaterial ausgeschäumt ist, wobei das Schaummaterial ein insbesondere korrosionshemmender insbesondere Kunststoffschaum ist.

22. Tragstruktur nach einem der vorhergehenden Ansprüche, **dadurch gekennzeichnet, daß** der Matrixkörper (1) mit durch Wände gebildeten Hohlräumen versehen ist und das Deformationselement so an der Tragstruktur (4) befestigt ist, daß zumindest ein Teil von bei einem Aufprall entwickelten Kräften unter einem Winkel bezüglich einer Haupterstrekungsrichtung der Wände (18) in diese einleitbar ist.

23. Tragstruktur nach Anspruch 22, **dadurch gekennzeichnet, daß** der Matrixkörper (1) aus zumindest einer zumindest teilweise strukturierten Blechlage (6, 7) derart geschlungen, gewickelt oder gestapelt ist, daß die Haupterstreckungsrichtung der die Wände (18) bildenden Blechlagen (6, 7) unter einem Winkel bezüglich der Längsachse (13) angeordnet ist.

24. Tragstruktur nach Anspruch 22 oder 23, **dadurch gekennzeichnet, daß** die Längsachse (13) des Matrixkörpers (1) im wesentlichen senkrecht zur Abstützung (14) angeordnet ist.

25. Tragstruktur nach einem der Ansprüche 22 bis 24, **dadurch gekennzeichnet, daß** die Längsachse (13) des Matrixkörpers (1) unter einem nicht rechten Winkel zur Abstützung (14) angeordnet ist.

26. Tragstruktur nach einem der Ansprüche 23 bis 25, **dadurch gekennzeichnet, daß** die Blechlage (6, 7) zu einem kegelförmigen oder kegelstumpfförmigen Matrixkörper (1) gewickelt, geschlungen oder gestapelt ist.

27. Tragstruktur nach einem der vorhergehenden Ansprüche, **dadurch gekennzeichnet, daß** das Deformationselement ein Deformationskraft-Deformationsweg-Profil (F,s-Profil) aufweist, welches nur einen relativ geringen Anfangspeak (15) aufweist.

28. Tragstruktur nach einem der vorhergehenden Ansprüche, **dadurch gekennzeichnet, daß** das Deformationselement ein Deformationskraft-Deformationsweg-Profil (F,s-Frofil) aufweist, welches durch eine geeignete Vielzahl von Solldeformationsstellen zumindest in einem Abschnitt näherungsweise konstant verläuft.

29. Tragstruktur nach einem der vorhergehenden Ansprüche, **dadurch gekennzeichnet, daß** das Deformationselement ein Deformationskraft-Deformationsweg-Profil (F,s-Profil) aufweist, welches durch eine Vielzahl von Solldeformationsstellen in zumindest einem Abschnitt progressiv ansteigend verläuft.

30. Tragstruktur nach einem der vorhergehenden Ansprüche, **dadurch gekennzeichnet, daß** der maximale Deformationsweg des Deformationselementes 60 bis 200 mm beträgt.

31. Verwendung einer Tragstruktur (4) mit den Merkmalen gemäß den Ansprüchen 1 bis 29 als ein Deformationselement zur Absorption von Bewegungsenergie insbesondere in einem Stoßfängersystem eines Fahrzeuges.

## Claims

1. Supporting structure with a deformation element for a motor vehicle for adsorbing kinetic energy during an impact, said deformation element being deformable as far as a residual length and being connected to said supporting structure (4), said deformation element including a honeycomb-shaped matrix body (1), **characterized in that** the matrix body (1) is self supporting having at least one radial deformation limiter (2) with an axial rigidity being smaller than the axial rigidity of the matrix body, wherein said at least one radial deformation limiter (2) is arranged at at least two axial partial regions of the matrix body (1) being spaced from one another.

2. Supporting structure according to claim 1, **characterized in that** the radial deformation limiter (2) is a jacket, said jacket at least partially surrounding said matrix body (1).

3. Supporting structure according to claim 1 or 2, **characterized in that** the ratio of the axial rigidity of the radial deformation limiter and the axial rigidity of the matrix body is in the range of 1 : 5 to 1 : 50, preferably smaller than 1 : 10.

4. Supporting structure according to claim 1, 2 or 3, **characterized in that** the radial deformation limiter (2) is a plurality of jacketing rings being spaced apart from one another which are disposed around said matrix body (1).

5. Supporting structure according to one of the proceeding claims, **characterized in that** the radial deformation limiter (2) is a bellows shaped corrugated hose having predetermined buckling points, the inside diameter of which is dimensioned such that the corrugation troughs substantially touch the circumferential surface of the matrix body (1).

6. Supporting structure according to claim 5, **characterized in that** the corrugations of the bellows shaped corrugated hose are designed such, that said corrugations act at the beginning of the deformation process as initiating structures for buckles and/or folds in the radial deformation limiter (2).

7. Supporting structure according to one of the proceeding claims, **characterized in that** the deformation limiter can be deformed in such a way, that the residual block length of the radial deformation limiter (2) is smaller or equal the residual block length of the matrix body (1).

8. Supporting structure according to one of the proceeding claims, **characterized in that** the deformation element has a perforated plate (9) with at least one hole (10) at at least one end face (19) at which a supporting element (14) at the supporting structure (4) is situated, said hole having dimensions allowing the displacement of parts of the matrix body (1) being within the region of the hole (10) in the direction of the deformation direction.

9. Supporting structure according to claim 8, **characterized in that** the perforated plate (9) has a plurality of holes (10) being uniformly distributed, wherein the edge (20) of the respective hole (10) extends over several sheet metal layers (6, 7), particularly over at least 5, preferably over at least 10.

10. Supporting structure according to claim 8 or 9, **characterized in that** the holes (10) are arranged in the exterior region of the perforated plate (9).

11. Supporting structure according to one of claims 8 to 10, **characterized in that** 20 to 80 %, in particular 40 to 60 % of the overall surface area of the perforated plate (9) are holes (10).

12. Supporting structure according to one of claims 8 to 11, **characterized in that** the perforated plate (9) is integrated with its edge (20) into the support element (14) of said supporting structure(4).

13. Supporting structure according to one of claims 5 to 12, **characterized in that** the predetermined buckling points are substantially configured as encircling beads (3).

14. Supporting structure according to one of claims 2 to 13, **characterized in that** the jacket has a thickness of 0,3 mm to 2,0 mm, preferably of 0,5 to 2,0 mm, if the jacket is made from aluminum, preferably 0,3 to 1,5 mm, if the jacket is made of steel, in particular of deep drawn steel.

15. Supporting structure according to one of the proceeding claims, **characterized in that** the matrix body (1) is made of sheet metal layers (6, 7), in particular of corrugated sheet metal layers (6, 7), with a plurality of channels (5), wherein the sheet metal layers (6, 7) have a thickness of 0,02 mm to 0,2 mm, in particular of 0,05 to 0,2 mm, if the sheet metal layers are made of aluminum, and of 0,02 to 0,15 mm, if the sheet metal layers are made of steel, in particular of deep drawn steel, and the matrix body (1) has a cell density of 50 to 600 cpsi (cells per square inch).

16. Supporting structure according to claim 15, **characterized in that** the matrix body (1) is stacked from at least partially structured sheet metal layers (6) or is looped or wound to a packet being essentially cylindrical in a spirally wound shape, in an approximately involute shape, or in an S-shape.

17. Supporting structure according to claim 15 or 16, **characterized in that** the cell density of the matrix body (1) is varying in direction of the channels (5) section wise.

18. Supporting structure according to one of claims 15 to 17, **characterized in that** the sheet metal layers (6, 7) of the matrix body (1) are having bead like structures (8) (transversal structures) being perpendicular or oblique to the direction of the channels (5), wherein the bead like structures (8) of the matrix body (1) are in particular arranged having distances of 2 mm to 20 mm.

19. Supporting structure according to one of claims 15 to 18, **characterized in that** the sheet metal layers (6, 7) of the matrix body (1) by which the channels (5) are formed, are having channel sections being laterally offset (longitudinal structures).

20. Supporting structure according to one of claims 15 to 19, **characterized in that** the corrugations of the sheet metal layers (6, 7) of the matrix body (1) form a curved configuration or a herringbone configuration.

21. Supporting structure according to one of the proceeding claims, **characterized in that** the honeycomb-shaped matrix body (1) is foamed with a foaming material, wherein the foaming material is in particular a corrosion inhibiting foam, in particular a foamed plastic.

22. Supporting structure according to one of the proceeding claims, **characterized in that** the matrix body (1) has hollow regions being formed by walls, the deformation element being secured to the supporting structure (4) in such a way, that at least a fraction of forces generated during impact is introducible into said walls (18) at an angle to the main direction of extension of the walls (18).

23. Supporting structure according to claim 22, **characterized in that** the matrix body (1) is looped, wound or stacked of at least one at least partially structured sheet metal layer (6, 7) in such a way, that the main extension direction of the sheet metal layers (6, 7) forming the walls (18) are arranged at an angle with respect to the longitudinal axis (13).

24. Supporting structure according to claim 22 or 23, **characterized in that** the longitudinal axis (13) of the matrix body (1) is arranged substantially perpendicular to the supporting element (14).

25. Supporting structure according to one of claims 22 to 24, **characterized in that** the longitudinal axis (13) of the matrix body (1) is arranged at an angle other than 90° with respect to the supporting element (14).

26. Supporting structure according to one of claims 23 to 25, **characterized in that** the sheet metal layer (6, 7) is looped, wound or stacked to a conical matrix body (1) or a frustoconical matrix body (1).

27. Supporting structure according to one of the proceeding claims, **characterized in that** the deformation element has a deformation force-deformation path profile (F, s-profile) having an insubstantial initial peak (15).

28. Supporting structure according of one of the proceeding claims, **characterized in that** the deformation element has a deformation force-deformation path profile (F, s-profile) with at least one profile section being substantially constant due to a suitable plurality of predetermined deformation points.

29. Supporting structure according to one of the proceeding claims, **characterized in that** the deformation element has a deformation force-deformation path profile (F, s-profile) which is in at least one section progressively rising due to a plurality of predetermined deformation points.

30. Supporting structure according to one of the proceeding claims, **characterized in that** the maximum deformation path of the deformation element is 60 to 200 mm.

31. Use of a deformation region (4) having features according to claims 1 to 29 as a deformation element for the absorption of kinetic energy in particular in a bumper system of a vehicle.

## Revendications

1. Structure porteuse comportant un élément de déformation pour un véhicule automobile, destiné à l'absorption d'énergie cinétique lors d'un choc, lequel élément de déformation est déformable jusqu'à une longueur de bloc résiduelle, est relié à la structure porteuse (4) et présente un corps de matrice (1) en forme de nids d'abeilles, **caractérisée en ce que** le corps de matrice (1) de l'élément de déformation est réalisé de façon autoportante et présente au moins un limiteur de déformation radiale (2) à rigidité axiale plus faible que celle du corps de matrice, dans quel cas l'au moins un limiteur de déformation radiale (2) est agencé sur au moins deux zones partielles axiales du corps de matrice (1) à distance l'une de l'autre.

2. Structure porteuse selon la revendication 1, **caractérisée en ce que** le limiteur de déformation radiale (2) est réalisé en tant qu'enveloppe et entoure au moins partiellement le corps de matrice (1).

3. Structure porteuse selon la revendication 1 ou 2, **caractérisée en ce que** le rapport entre la rigidité axiale du limiteur de déformation radiale (2) et celle du corps de matrice comporte 1 : 5 à 1 : 50, est de préférence plus petit que 1 : 10.

4. Structure porteuse selon la revendication 1, 2 ou 3, **caractérisée en ce que** le limiteur de déformation radiale (2) est réalisé autour du corps de matrice (1) en forme d'anneaux d'enveloppe s'étendant à distance.

5. Structure porteuse selon l'une des revendications précédentes, **caractérisée en ce que** le limiteur de déformation radiale (2) est réalisé en tant que tuyau onduleux à la façon d'un soufflet en accordéon avec des positions destinées à l'inflexion, dont le diamètre intérieur est dimensionné de telle manière que ses creux d'ondes touchent sensiblement la surface périphérique du corps de matrice (1).

6. Structure porteuse selon la revendication 5, **caractérisée en ce que** les ondulations du tuyau onduleux sont réalisées de telle manière qu'en début de l'opération de déformation elles agissent en tant que germes initiaux pour des positions d'inflexion et/ou de pliage du limiteur de déformation radiale (2).

7. Structure porteuse selon l'une des revendications précédentes, **caractérisée en ce que** l'élément de déformation est déformable de telle manière que la longueur de bloc résiduelle du limiteur de déformation radiale (2) est plus petite que ou pareille à la longueur de bloc résiduelle du corps de matrice (1).

8. Structure porteuse selon l'une des revendications précédentes, **caractérisée en ce que** l'élément de déformation présente au moins sur une face frontale (19), sur laquelle se trouve un support (14) sur la structure porteuse (4), une plaque perforée (9) avec au moins un trou (10), qui est dimensionné de telle manière que des parties du corps de matrice (1) se trouvant dans la zone du trou (10) peuvent être déplacées en direction du trajet de déformation.

9. Structure porteuse selon la revendication 8, **caractérisée en ce que** la plaque perforée (9) présente plusieurs trous à répartition égale, dans quel cas le bord (20) du trou respectif(10) s'étend sur plusieurs couches de tôles (6, 7), de préférence sur au moins cinq, notamment sur au moins dix.

10. Structure porteuse selon la revendication 8 ou 9, **caractérisée en ce que** les trous (10) sont agencés dans la zone extérieure de la plaque perforée (9).

11. Structure porteuse selon l'une des revendications 8 à 10, **caractérisée en ce que** 20 à 80%, notamment 40 à 60%, de l'aire totale de la plaque perforée (9) sont des trous (10).

12. Structure porteuse selon l'une des revendications 8 à 11, **caractérisée en ce que** la plaque perforée (9) est intégrée avec son bord (20) dans le support (14) de la structure porteuse (4).

13. Structure porteuse selon l'une des revendications 5 à 12, **caractérisée en ce que** les positions destinées à l'inflexion sont réalisées en tant que bourrelets (3) s'étendant sensiblement de manière périphérique.

14. Structure porteuse selon l'une des revendications 2 à 13, **caractérisée en ce que** l'enveloppe a une épaisseur de 0,3 mm à 2,0 mm, de préférence dans le cas d'une enveloppe d'aluminium 0,5 à 2,0 mm et dans le cas d'une enveloppe d'acier, notamment d'acier d'emboutissage, 0,3 à 1,5 mm.

15. Structure porteuse selon l'une des revendications précédentes, **caractérisée en ce que** le corps de matrice (1) est constitué de couches de tôles notamment ondulées (6, 7) avec une multiplicité de canaux (5), dans quel cas les couches de tôles (6, 7) présentent une épaisseur de 0,02 mm à 0,2 mm, de préférence dans le cas de tôles en aluminium une épaisseur de 0,05 à 0,2 mm et dans le cas de tôles en acier, notamment d'acier d'emboutissage, 0,02 à 0,15 mm et dans quel cas le corps de matrice (1) a une densité cellulaire de 50 à 600 cpsi (cells per square inch).

16. Structure porteuse selon la revendication 15, **caractérisée en ce que** le corps de matrice (1) est empilé de couches de tôles (6) au moins partiellement structurées ou est enroulé ou enlacé en une forme de spirale, environ en forme de développante ou en forme de S, en un paquet sensiblement cylindrique.

17. Structure porteuse selon la revendication 15 ou 16, **caractérisée en ce que** la densité cellulaire du corps de matrice (1) varie par sections en direction des canaux (5).

18. Structure porteuse selon l'une des revendications 15 à 17, **caractérisée en ce que** les couches de tôles (6, 7) du corps de matrice (1) présentent transversalement ou obliquement à la direction des canaux (5) des structures à la façon de bourrelets (8) (structures transversales), les structures à la façon de bourrelets (8) du corps de matrice (1) étant notamment agencées à des écarts de 2 mm à 20 mm.

19. Structure porteuse selon l'une des revendications 15 à 18, **caractérisée en ce que** les couches de tôles (6, 7) du corps de matrice (1), par lesquelles les canaux (5) sont formés, ont des sections de canaux décalées latéralement (structures longitudinales).

20. Structure porteuse selon l'une des revendications 15 à 19, **caractérisée en ce que** les ondulations des couches de tôles (6, 7) du corps de matrice (1) ont un agencement courbé ou un agencement en arêtes de hareng.

21. Structure porteuse selon l'une des revendications précédentes, **caractérisée en ce que** le corps de matrice (1) en forme de nids d'abeilles est moussé avec un matériau de mousse, le matériau de mousse étant notamment une mousse plastique anticorrosive.

22. Structure porteuse selon l'une des revendications précédentes, **caractérisée en ce que** le corps de matrice (1) est pourvu de cavités formées par des parois et que l'élément de déformation est fixé de telle manière à la structure porteuse (4) qu'au moins une partie des forces, se développant lors d'un choc, peut être introduite dans les parois suivant un angle par rapport à une direction principale d'étendue des parois (18).

23. Structure porteuse selon la revendication 22, **caractérisée en ce que** le corps de matrice (1) est enlacé, enroulé ou empilé de telle manière d'au moins une couche de tôle (6, 7) au moins partiellement structurée que la direction principale d'étendue des couches de tôles (6, 7) formant les parois (18) est agencée sous un angle par rapport à l'axe longitudinal (13).

24. Structure porteuse selon la revendication 22 ou 23, **caractérisée en ce que** l'axe longitudinal (13) du corps de matrice (1) est agencé sensiblement de manière perpendiculaire par rapport au support (14).

25. Structure porteuse selon l'une des revendications 22 à 24, **caractérisée en ce que** l'axe longitudinal (13) du corps de matrice (1) est agencé sous un angle pas droit par rapport au support (14).

26. Structure porteuse selon l'une des revendications 23 à 25, **caractérisée en ce que** la couche de tôle (6, 7) est enroulée, enlacée ou empilée en un corps de matrice (1) en forme de cône ou en forme de cône tronqué.

27. Structure porteuse selon l'une des revendications précédentes, **caractérisée en ce que** l'élément de déformation a un profil de force de déformation-trajet de déformation (profil F, s), qui n'a qu'une crête initiale (15) relativement basse.

28. Structure porteuse selon l'une des revendications précédentes, **caractérisée en ce que** l'élément de déformation a un profil de force de déformation-trajet de déformation (profil F, s), qui au moins dans une section se déroule de manière approximativement constante grâce à une multiplicité appropriée de positions destinées à la déformation (3).

29. Structure porteuse selon l'une des revendications précédentes, **caractérisée en ce que** l'élément de déformation a un profil de force de déformation-trajet de déformation (profil F, s) qui grâce à une multiplicité de positions destinées à la déformation se déroule dans au moins une section de façon à hausse progressive.

30. Structure porteuse selon l'une des revendications précédentes, **caractérisée en ce que** le trajet maximal de déformation de l'élément de déformation comporte 60 à 200 mm.

31. Utilisation d'une structure porteuse (4) avec les caractéristiques selon les revendications 1 à 29 en tant qu'élément de déformation destiné à l'absorption d'énergie cinétique, notamment dans un système d'amortisseur de chocs d'un véhicule.
